# DEMANDE DE BREVET EUROPEEN

(11) **EP 1 538 507 A1**
(43) Date de publication de la demande: **08.06.2005**
(21) Numéro de dépôt: 03293002.6
(22) Date de dépôt: 02.12.2003
(51) Int. Cl.: G06F 1/00

(54) **Procédé de contrôle d'acces dans une memoire flash et systeme pour la mise en oeuvre d'un tel procédé**

(71) Demandeur: Axalto S.A., 92120 Montrouge (FR)
(72) Inventeur: Ngo, Van Tai, 78431 Louveciennes Cédex (FR); Boudou, Alain, 78431 Louveciennes Cédex (FR); Castillo, Laurent, 78431 Louveciennes Cédex (FR)
(74) Mandataire: Renault, Patricia Marie Jacqueline

(57) **Abrégé**

La présente invention concerne un procédé de contrôle d'accès à un secteur d'une mémoire de type Flash d'un module électronique consistant à vérifier que le propriétaire des données à écrire est autorisé à accéder en écriture à une partition dudit secteur. Le procédé consiste à vérifier au moins une règle supplémentaire sur le secteur concerné de manière à autoriser un éventuel effacement de l'ensemble dudit secteur avant d'écrire dans celui-ci. La ou les règles permette(nt) de vérifier que l'effacement du secteur concerné n'entraîne pas la suppression de données à conserver.

La présente invention concerne également le module électronique dans lequel le procédé est implémenté.

## Description

La présente invention concerne un procédé de contrôle d'accès dans une mémoire flash d'un module électronique ainsi que le module pour la mise en oeuvre d'un tel procédé.

L'invention s'applique selon une forme de réalisation particulière, à un objet portable tel qu'une carte à circuit intégré. Les cartes à circuits intégrés peuvent être par exemple des cartes à mémoire ou des cartes à microprocesseur.

Dans le cadre de l'invention, le terme "objet portable" doit être compris dans son sens le plus général. Il concerne notamment toutes sortes de terminaux légers munis d'une puce électronique, et plus particulièrement les cartes à puce proprement dites. La puce électronique est munie elle-même de moyens de traitement d'informations (par exemple un microprocesseur) et de moyens de mémorisation d'informations.

### DOMAINE TECHNIQUE

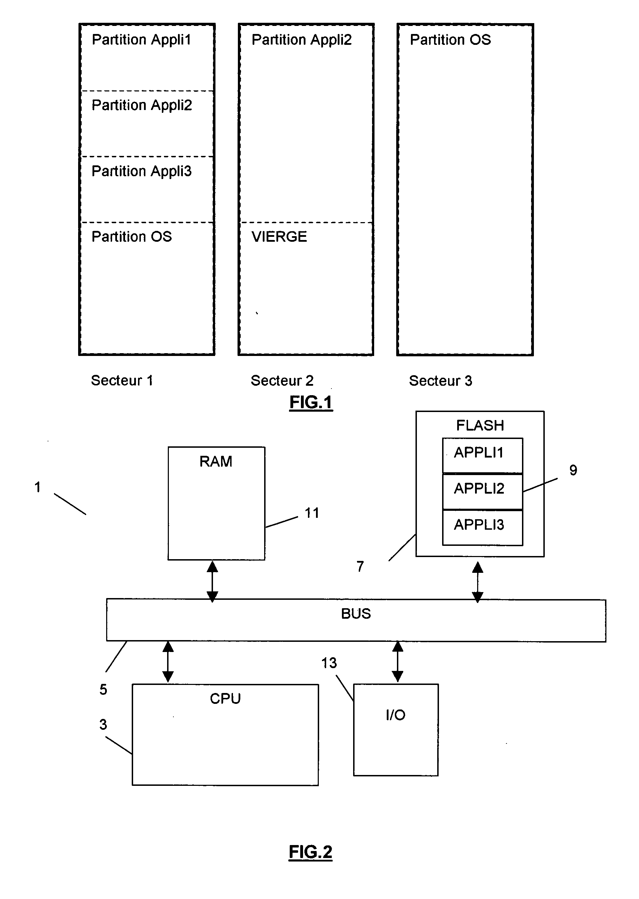

Actuellement, une nouvelle technologie de mémoire non volatile est en cours d'introduction dans les cartes à puces : la technologie Flash. La mémoire Flash est organisée en secteurs comme le montre la figure 1 (secteurs 1, 2 et 3). Chaque secteur est un bloc mémoire de taille unique. L'espace mémoire de chaque secteur est divisé en pages mémoire, par exemple de 128 octets, regroupées en partitions, ou segments, (ex. : partition Appli1, partition Appli2, partition Appli3 et partition OS du secteur 1 sur la figure 1) dans lesquelles sont implantés divers modules logiciels (Appli1, Appli2, Appli3, OS). Une partition rassemble l'ensemble des pages d'un secteur attribué à un même propriétaire.

Dans les cartes multi-applicatives, plusieurs applications peuvent partager un même secteur (par exemple, les applications 1, 2 et 3 se partagent le secteur 1 sur la figure 1 ).

Les contrôleurs d'accès de type connu autorisent à une application donnée l'accès en écriture à un secteur dont elle est propriétaire ou qu'elle partage. Dans la mémoire Flash, un secteur définit l'unité de mémoire effaçable : cette spécificité implique l'effacement de la totalité d'un secteur si l'on désire modifier une partie non vierge de son contenu, telle que par exemple la modification d'une partition. Pour écrire dans une partie non vierge d'un secteur, la totalité du secteur est effacée : un secteur constitue une unité indivisible pour l'effacement. Ainsi, comme le montre la figure 1, si l'application 1 souhaite modifier le secteur 1, elle pourra effacer les données de l'application 2 ou même du système d'exploitation. Lors de l'effacement avant écriture, des dommages irrémédiables sur des partitions contenant des données d'autres applications peuvent être causés.

Une solution connue est d'attribuer un secteur entier à un seul propriétaire. Cependant, lorsque le secteur est de grande taille, il en résulte une perte importante de mémoire et un manque de souplesse.

Un but de la présente invention est d'optimiser l'écriture dans une mémoire Flash.

### RESUME DE L'INVENTION

La présente invention concerne un procédé de contrôle d'accès à un secteur d'une mémoire de type Flash d'un module électronique consistant à vérifier que le propriétaire des données à écrire est autorisé à accéder en écriture à une partition dudit secteur caractérisé en ce qu'il consiste à vérifier au moins une règle supplémentaire sur le secteur concerné de manière à autoriser un éventuel effacement de l'ensemble dudit secteur avant d'écrire dans celui-ci.

La présente invention concerne également le module électronique comportant des moyens de traitement de l'information, une mémoire non volatile de type FLASH caractérisé en ce qu'il comporte un gestionnaire de mémoire consistant à vérifier sur le secteur concerné au moins une règle supplémentaire à celle consistant à vérifier que le propriétaire des données à écrire est autorisé à accéder en écriture à une partition dudit secteur, de manière à autoriser un éventuel effacement de l'ensemble dudit secteur avant d'écrire dans celui-ci.

### DESCRIPTION SOMMAIRE DES DESSINS

D'autres buts, avantages et caractéristiques de l'invention apparaîtront à la lecture de la description qui va suivre de la mise en oeuvre du procédé selon l'invention et d'un mode de réalisation d'un ensemble électronique adapté pour cette mise en oeuvre, donnés à titre d'exemple non limitatif en référence aux dessins ci-annexés dans lesquels :
- la figure 1 montre une représentation schématique de l'organisation d'une mémoire Flash ;
- la figure 2 montre une représentation schématique d'un mode de réalisation non limitatif d'une unité électronique à microprocesseur adaptée pour mettre en oeuvre le procédé selon l'invention ;
- la figure 3 représente de manière schématique les différentes couches logicielles et matérielles du système de contrôle d'accès selon la présente invention.

### MANIERE DE REALISER L'INVENTION

Le procédé selon l'invention vise à optimiser l'écriture dans une mémoire Flash d'un système électronique, tel que par exemple tout objet portable muni d'un module électronique et plus particulièrement une carte à circuit intégré. Le système électronique comprend au moins un processeur et une mémoire non-volatile de type Flash. Par mémoire de type FLASH, on entend dans la description qui suit toute mémoire organisée en secteur, le secteur constituant une unité indivisible d'effacement, le secteur étant lui-même subdivisé en pages mémoire susceptibles d'être attribuées à des propriétaires différents.

A titre d'exemple non limitatif, le système électronique décrit dans ce qui suit correspond à un objet portable comprenant un module électronique 1 illustré sur la figure 1. De tels modules sont réalisés le plus souvent sous la forme d'un microcircuit électronique intégré monolithique, ou puce, qui une fois protégé physiquement par tout moyen connu peut être monté sur un objet portatif tel que par exemple une carte à puce, carte à microcircuit ou autre utilisable dans divers domaines.

Le module électronique 1 à microprocesseur comprend un microprocesseur CPU 3 relié de façon bidirectionnelle par un bus 5 interne à une mémoire 7 non volatile de type Flash contenant des applications 9, appli1, appli2, appli3, à exécuter, une mémoire 11 vive de type RAM, des moyens 13 I/O d'entrée/sortie pour communiquer avec l'extérieur.

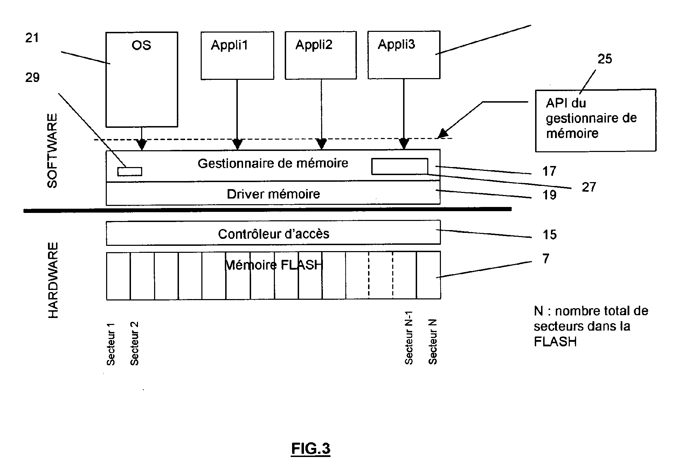

Comme représenté sur la figure 3, on distingue à partir de la couche matérielle constituée de la mémoire Flash 7 et d'un contrôleur 15 d'accès à la mémoire 7, une couche logicielle comprenant un gestionnaire 17 de mémoire associé ou non à un pilote 19 et une couche logicielle comprenant des applications 21 résidantes par exemple un programme du système d'exploitation et des applications 23 « utilisateur » correspondant à des fonctionnalités précises (exemple pour une carte à circuit intégré : carte bancaire, carte santé, carte d'identification de personnes). Cette représentation illustre de manière schématique uniquement le système de contrôle d'accès à la mémoire, sachant que les couches matérielles et logicielles comprennent beaucoup d'autres modules de fonctionnalités diverses.

Le contrôleur 15 d'accès a pour fonction de vérifier que celui qui veut accéder à une adresse de la mémoire détient les droits pour le faire. De façon générale, le contrôleur 15 d'accès peut être réalisé sous la forme de fenêtres ouvertes sur une suite de pages (tel qu'un dispositif de segmentation MPU) ou sous la forme de matrices d'accès semi-statiques associant des attributs aux pages (dispositif de type partition MAC). L'association d'applications à des zones mémoire se fait soit à la configuration soit lors de la sélection d'une application. De tels mécanismes n'autorisent l'accès en mémoire que pour des couples prédéterminés code /zone de données. Dans le cas d'une matrice d'accès, par exemple, le rôle du contrôleur d'accès au moment de l'exécution se limite à une simple comparaison entre l'identité du « propriétaire » de la page et l'identité du module qui cherche à accéder à cette page.

Selon la présente invention, le gestionnaire 17 de mémoire intercepte les écritures en mémoire 7 Flash et effectue une vérification supplémentaire sur le secteur concerné avant d'autoriser ou pas l'effacement du secteur consécutif à l'écriture. La vérification détermine si l'effacement provoqué par l'écriture n'aura pas pour conséquence de supprimer des données appartenant à d'autres propriétaires. Le terme « donnée » dans la présente description recouvre tout type d'informations enregistrées dans la mémoire que ce soit du code, des données ou autres. Les écritures ne doivent jamais se faire directement en mémoire, ni par appel direct à un pilote, mais se faire via appel audit gestionnaire de mémoire. Le gestionnaire peut également vérifier les droits en écriture dans la page indiquée.

Le procédé selon l'invention consiste à l'aide du gestionnaire de mémoire, à vérifier un ensemble de règles pour l'ensemble du secteur concerné, de manière à autoriser l'effacement d'un secteur avant d'écrire dans celui-ci.

Le jeu de règle portant sur le secteur prend en considération le propriétaire ou les propriétaires des pages du segment concerné et le contenu des pages. Le jeu de règles vérifie que l'écriture ne peut pas supprimer des données à conserver et en particulier de données d'un propriétaire autre que celui qui requiert l'écriture.

Ainsi la vérification s'appuie sur une ou plusieurs règle(s) du type :
- L'écriture est autorisée si :
   o l'emplacement dans le secteur duquel l'écriture doit se faire est vierge, sachant que le secteur n'est pas forcément totalement vierge; l'écriture n'engendre pas d'effacement ;
   o Et/ou le secteur entier appartient au même propriétaire ;
   o Et/ou les pages n'appartenant pas au même propriétaire sont vierges ;
   o Et/ou les pages n'appartenant pas au même propriétaire sont marqués comme effaçables.

Dans la présente description, on dit qu'un secteur est vierge lorsque aucune écriture n'a été réalisée dans le secteur ou lorsque le secteur a été effacé et qu'aucune nouvelle écriture n'a été réalisée depuis l'effacement.

Selon une forme de réalisation particulière de l'invention, le module selon la présente invention comprend l'ensemble de ces règles.

Le gestionnaire dispose de :
- une description 27 de la mémoire stockée en mémoire :
   o nombre de secteurs
   o nombres de pages par secteur
   o propriétaire de chaque page
   o le statut des pages (effaçable, vierge ou non vierge)
- une description de la requête en cours :
   o le secteur concerné (à partir de l'adresse)
   o le propriétaire émetteur de la requête
- et un jeu de règles 29.

Le gestionnaire de mémoire permet à un propriétaire de marquer des pages lui appartenant comme effaçables. Comme vu précédemment, le gestionnaire conserve le statut des pages marquées comme effaçables dans la description 27.

De plus, le gestionnaire de mémoire doit respecter les conditions suivantes :
- Le code de vérification doit être exécuté avec les privilèges nécessaires pour autoriser ou pas l'effacement d'un secteur ;
- Tous les accès mémoires passent obligatoirement par ce gestionnaire;
- Le code ne doit pas être altérable par le code d'un autre propriétaire non autorisé.

Une interface 25 de programmation applicative (API) simple découlant des contraintes précédentes pourrait comprendre par exemple les fonctions suivantes :
- error nv_write(dst_addr, src_addr, length):
   o dst_addr: adresse de destination où seront écrites les données
   o src_addr : adresse source à partir de laquelle les données seront lues pour être écrites
   o length : longueur des données à écrire.

Cette fonction permet d'écrire en mémoire des données lues à une certaine adresse après avoir vérifié le jeu de règles.
- error nv_fill(dst_addr, pattern, length):
   o dst_addr : adresse de destination où commencera le remplissage de le mémoire avec le pattern requis
   o pattern : octet à reproduire
   o length : taille de la zone à remplir

Cette fonction permet d'écrire en mémoire des données d'un « pattern » après avoir vérifié le jeu de règles.

Dans l'exemple illustré sur la figure 1, si les applications et le système d'exploitation n'autorisent aucune modification ou aucun effacement par un tiers :
o Dans le secteur 1, le gestionnaire n'autorisera aucune des applications, ni le système d'exploitation à effacer le secteur car le secteur est partagé entre 4 partitions de propriétaires différents et aucun propriétaire autorise son voisin à modifier sa propre partition. Le secteur ne pourra être effacé uniquement que si les 4 partitions sont marquées par leur propriétaire comme effaçables.
o Dans le cas du secteur 2, le gestionnaire autorisera l'application n°2 à effacer sa propre partition puisque le reste du secteur est vierge ;
o Dans le cas du secteur 3, le secteur appartient entièrement au système d'exploitation et donc le système d'exploitation a tous les droits sur ce secteur. Il peut donc l'effacer.

## Revendications

1. Procédé de contrôle d'accès à un secteur d'une mémoire de type Flash d'un module électronique consistant à vérifier que le propriétaire des données à écrire est autorisé à accéder en écriture à une partition dudit secteur **caractérisé en ce qu'**il consiste à vérifier au moins une règle supplémentaire sur le secteur concerné de manière à autoriser un éventuel effacement de l'ensemble dudit secteur avant d'écrire dans celui-ci.

2. Procédé selon la revendication 1, **caractérisé en ce que** la ou les règle(s) supplémentaire(s) permette(nt) de vérifier que l'écriture n'entraîne pas la suppression de données de données d'un propriétaire autre que celui qui requiert l'accès en écriture.

3. Procédé selon la revendication 2, **caractérisé en ce que** la vérification s'appuie sur une règle ou une combinaison de règles du type : l'écriture est autorisée si :
o Le secteur entier appartient au même propriétaire, et/ou
o Les pages n'appartenant pas au même propriétaire sont vierges, et/ou
o Les pages n'appartenant pas au même propriétaire sont marqués comme effaçables, et/ou
o L'emplacement dans le secteur duquel l'écriture doit se faire est vierge, le secteur n'étant pas forcément totalement vierge.

4. Procédé selon l'une des revendications 1 à 3, **caractérisé en ce qu'**il consiste à marquer des pages d'un secteur appartenant au propriétaire le demandant comme effaçables.

5. Module électronique comportant des moyens de traitement de l'information, une mémoire non volatile de type FLASH **caractérisé en ce qu'**il comporte un gestionnaire 17 de mémoire consistant à vérifier sur le secteur concerné au moins une règle supplémentaire à celle consistant à vérifier que le propriétaire des données à écrire est autorisé à accéder en écriture à une partition dudit secteur, de manière à autoriser un éventuel effacement de l'ensemble dudit secteur avant d'écrire dans celui-ci.

6. Module selon la revendication 5, **caractérisé en ce qu'**il intercepte toutes les écritures en mémoire Flash.

7. Module selon l'une des revendications 5 ou 6, **caractérisé en ce que** le gestionnaire 17 de mémoire a accès à une description 27 des secteurs de la mémoire comprenant le statut des pages desdits secteurs.

8. Carte **caractérisée en ce qu'**elle comprend le module électronique selon l'une des revendications 5 à 7.

9. Programme d'ordinateur comprenant des instructions de code de programme pour l'exécution des étapes du procédé selon l'une des revendications 1 à 4 lorsque ledit programme est exécuté dans un ensemble électronique.
